# FASCICULE DE BREVET EUROPEEN

(11) **EP 4 587 325 B1**
(45) Date de publication et mention de la délivrance du brevet: **11.11.2026**
(21) Numéro de dépôt: 23772238.4
(22) Date de dépôt: 15.09.2023
(51) Int. Cl.: B64C 1/14

(54) **SYSTÈME VITRÉ CONFIGURÉ POUR BLOQUER DES GLISSEMENTS DE VITRAGE**
GLASSYSTEM ZUR RUTSCHVERHINDERUNG VON GLASPLATTEN
GLAZED SYSTEM CONFIGURED TO PREVENT GLASS PANELS FROM SLIPPING

(30) Priorité: 16.09.2022 FR 2209329
(43) Date de publication de la demande: 23.07.2025
(73) Titulaire: Saint-Gobain Sully, 45600 Sully-sur-Loire (FR)
(72) Inventeur: MAYEUX, Jean-Benoît, 45600 SULLY-SUR-LOIRE (FR); TONDU, Thomas, 92400 COURBEVOIE (FR)
(74) Mandataire: Saint-Gobain Recherche
(86) Numéro de dépôt international: PCT/EP2023/075478
(87) Numéro de publication internationale: WO 2024/056878

(56) Documents cités:
- EP-A2- 0 307 317
- WO-A1-2014/183611
- WO-A1-2022/101574
- US-A- 2 388 786
- US-A- 2 696 451
- US-A1- 2015 047 275
- US-A1- 2018 201 358
- US-A1- 2021 187 913

## Description

### Technique antérieure

La présente demande appartient au domaine général de la fabrication de vitrages, notamment de vitrages pour véhicules. Elle concerne plus particulièrement un système vitré, une utilisation de ce système vitré ainsi qu'un véhicule équipé dudit système vitré.

L'invention trouve une application particulièrement avantageuse, bien que nullement limitative, dans le cas d'un véhicule soumis à des différentiels de pressions entre un environnement (une atmosphère) extérieur et l'intérieur dudit véhicule, comme par exemple un aéronef (exemple : avion commercial), un véhicule ferroviaire (exemple : train) ou bien encore un véhicule maritime (exemple : bateau, sous-marin).

A ce jour, on connait différentes manières de réaliser l'intégration d'un vitrage comportant une pluralité de plis structuraux à la structure d'un véhicule. Ainsi, il est par exemple connu de réaliser un montage dit « pincé » (ou bien encore dit « clampé ») d'un tel vitrage, cette configuration étant notamment mise en œuvre (sans pour autant y être restreinte) lorsque le véhicule est destiné à être soumis à des différentiels de pression.

Par « pli structural », il est classiquement fait référence à une feuille de verre rigide constitutive du vitrage et susceptible de constituer à elle seule un vitrage monolithique, d'en assurer la résistance mécanique, en particulier, et dont le module élastique est par exemple au moins égal à 1500 MPa.

La terminologie de « vitrage pincé » tient au fait que, dans la direction normale au plan du vitrage, le maintien du vitrage est assuré par le pincement des plis structuraux par la structure du véhicule, typiquement par deux éléments positionnés de part et d'autre des plis structuraux. A titre d'exemple, dans le cas d'un vitrage destiné à une application aéronautique, ce pincement peut être réalisé entre un élément appelé presse-glace (ou bien encore rapplique), jouant le rôle d'élément de retenue (encore appelé "retainer" en anglais), et un autre élément structurel positionné en regard du pli structurel interne (i.e. au pli structural agencé au plus près de l'intérieur du véhicule).

Il est à noter que le pincement peut également s'appliquer à un ou plusieurs éléments d'étanchéité, comme par exemple un ou plusieurs joints, insérés entre les plis structuraux et la structure du véhicule. Une configuration connue de ce type est par exemple celle où la périphérie d'un vitrage pincé est réalisée par surmoulage d'un joint d'étanchéité encapsulant l'ensemble des constituants du vitrage, à savoir donc notamment lesdits plis structuraux, mais aussi possiblement encore d'autres éléments, comme par exemple une cale de rigidification (encore dite cale de compensation ») positionnée dans un logement du joint et attachée fixement au pli structural interne.

Dans le plan du vitrage, le maintien du vitrage est assuré de deux manières. D'une part, dans une première direction de déplacement tendant à augmenter le recouvrement des plis structuraux par la structure du véhicule au niveau de la zone de pinçage, le maintien est assuré par la mise en butée du vitrage, au niveau de son chant, dans la structure du véhicule. D'autre part, dans une direction opposée à ladite première direction, le maintien est assuré par la rigidité du vitrage en permettant un recouvrement minimal entre le vitrage et la structure du véhicule.

Parmi les exigences fonctionnelles auxquelles doit répondre un vitrage pincé soumis à des différentiels de pression se trouve la résistance à la pression (i.e. le vitrage doit rester dans son logement), qui doit être garantie non seulement lorsque le vitrage est intact (cas standard) mais également en cas de casse d'un pli structural du vitrage (cas appelé en anglais « fail safe »).

A cela vient parfois s'ajouter une exigence supplémentaire (cas appelé en anglais « full fail safe ») correspondant à la résistance à la pression en cas de casse des tous les plis structuraux du vitrage. A titre d'exemple, dans le cadre d'une application aéronautique, cette exigence supplémentaire vise notamment à permettre à un aéronef de terminer son vol sans que l'aéronef soit mis en danger.

Les montages pincés connus actuellement ne permettent pas de répondre de manière optimale à cette exigence de sécurité supplémentaire, en particulier pour les vitrages de grande taille. En effet, la casse de l'ensemble des plis verriers structuraux peut conduire à une perte de la rigidité du vitrage. Cette perte de rigidité est elle-même susceptible d'engendrer, par glissement dans le plan du vitrage, une diminution de la taille de recouvrement entre plis structuraux et la structure du véhicule. De cela peut résulter des défauts d'étanchéité à l'air, voire, dans certaines circonstances, une déflection suffisamment importante du vitrage allant jusqu'à son déchaussement (et donc sa perte).

Il est à noter que la problématique ainsi exposée ne se limite pas au cas d'un vitrage pincé intégré à un véhicule, mais concerne in fine toute configuration dans laquelle un vitrage est utilisé selon un montage pincé, comme par exemple un vitrage anti-effraction.

Un exemple de l'art antérieur est présenté par le document US2018201358A1.

### Exposé de l'invention

La présente invention a pour objectif de remédier à tout ou partie des inconvénients de l'art antérieur, notamment ceux exposés ci-avant, en proposant une solution qui permette d'obtenir un vitrage pincé répondant, de manière plus efficace que les solutions de l'état de la technique, à l'exigence de « full fail safe » en cas de casse de l'ensemble de ses plis structuraux. La solution ainsi proposée est simple à mettre en œuvre ainsi qu'adaptable aux structures déjà existantes sans en modifier l'encombrement.

A cet effet, et selon un premier aspect, l'invention concerne un ensemble comprenant une structure et un système vitré comprenant un vitrage, par exemple un vitrage feuilleté, comportant des plis structuraux, ledit vitrage étant maintenu par pincement par une structure. Ledit système vitré comporte en outre :
- au moins un élément de blocage, dit « primaire », solidaire du vitrage dans la zone où le pincement est exercé par la structure,
- au moins un élément de blocage, dit « secondaire », solidaire de la structure, lesdits au moins un élément de blocage primaire et secondaire étant configurés pour coopérer entre eux lors d'un glissement du vitrage dans le plan dans lequel il s'étend et orienté vers le centre dudit vitrage, de sorte à bloquer ledit glissement.

Ainsi, les éléments de blocage du système vitré selon l'invention permettent de bloquer les glissements du vitrage et ainsi de maintenir le bord de celui-ci dans son logement. De cette manière, les fonctions d'étanchéité à la pression sont garanties, même en cas de casse de tout ou partie des plis structuraux.

Lorsque le vitrage subit des forces susceptibles d'engendrer un glissement dans son plan, ces forces viennent renforcer le lien entre chaque élément de blocage et le support auquel il est fixé.

La mise en œuvre desdits éléments de blocage est particulièrement aisée, ce qui participe avantageusement à la simplicité de réalisation et de montage du vitrage pincé.

Qui plus est, la taille réduite des éléments de blocage, au regard des autres éléments du système vitré, permet avantageusement de ne pas modifier l'encombrement d'un système vitré tel que connu de l'état de l'art. L'invention peut donc être implémentée très facilement sur une structure de véhicule préexistante.

Par « ledit vitrage étant maintenu par pincement par une structure » il est entendu qu'à l'état monté du système vitré, le vitrage du système vitré est maintenu par pincement par ladite structure.

Selon l'invention, lesdits au moins un élément de blocage primaire et secondaire sont configurés pour présenter une configuration de blocage dans laquelle ils coopèrent entre eux lors d'un glissement du vitrage dans le plan dans lequel il s'étend et orienté vers le centre dudit vitrage, de sorte à bloquer ledit glissement, lesdits au moins un élément de blocage primaire et secondaire étant, en outre, configurés pour présenter une configuration nominale dans laquelle ils ne coopèrent pas ensemble lorsque le vitrage ne subit aucun glissement dans ledit plan.

Selon l'invention, lesdits au moins un élément de blocage primaire et secondaire sont configurés pour passer de la configuration nominale dans la configuration de blocage lors d'un glissement du vitrage dans le plan dans lequel il s'étend et orienté vers le centre dudit vitrage, de sorte à bloquer ledit glissement.

Dans des modes particuliers de réalisation, ledit système comporte une pluralité d'éléments de blocage primaires, ainsi qu'une pluralité d'éléments de blocage secondaires, chaque élément de blocage primaire étant configuré pour coopérer avec un unique élément de blocage secondaire.

Dans des modes particuliers de réalisation, ledit système comporte un unique élément de blocage primaire et/ou un unique élément de blocage secondaire, chaque élément de blocage unique s'étendant de manière continue de sorte à former une boucle fermée à l'intérieur de laquelle sont agencés les plis structuraux.

Dans des modes particuliers de réalisation :
- au moins deux d'éléments de blocage primaire et secondaire configurés pour coopérer entre eux sont respectivement solidaires d'un pli structural externe du vitrage et d'un élément de montage de la structure agencé en regard dudit pli structural externe, par exemple un presse-glace,
   et/ou
- au moins deux d'éléments de blocage primaire et secondaire configurés pour coopérer entre eux sont respectivement solidaires d'une cale de rigidification (160) et d'un élément de montage de la structure agencé en regard dudit pli structural interne, ladite cale étant logée dans un joint d'étanchéité (120), par exemple un joint d'étanchéité surmoulé dans lequel sont encapsulés les plis structuraux au niveau de leur périphérie, et fixée à un pli structural interne du vitrage.

Dans des modes particuliers de réalisation :
- ledit au moins un élément de blocage primaire vient de matière avec le pli structural externe ou avec la cale de rigidification,
   ou
- ledit au moins un élément de blocage primaire est rapporté et fixé sur le pli structural externe ou sur la cale de rigidification, par exemple par collage, frittage, brasage ou boulonnage.

Dans des modes particuliers de réalisation :
- ledit au moins un élément de blocage secondaire vient de matière avec ledit élément de montage de la structure agencé en regard du pli structural externe ou du pli structural interne,
   ou
- ledit au moins un élément de blocage secondaire est rapporté et fixé sur ledit élément de montage de la structure agencé en regard du pli structural externe ou du pli structural interne, par exemple par collage, frittage, brasage ou boulonnage.

Selon l'invention, la coopération entre au moins deux d'éléments de blocage primaire et secondaire s'effectue de manière directe ou indirecte au moyen de surfaces de contact respectives desdits éléments de blocage primaire et secondaire, lesdites surfaces de contact étant inclinées par rapport au plan du vitrage.

Selon l'invention, l'angle d'inclinaison des surfaces de contact par rapport au plan du vitrage est compris entre 5° et 60°, plus particulièrement entre 20° à 40°, préférentiellement égal à 25°.

Selon un deuxième aspect, l'invention concerne l'utilisation d'un ensemble vitré tel que défini précédemment pour un véhicule, par exemple de type aéronef, ferroviaire ou maritime, ou pour un bâtiment.

Selon un troisième aspect, l'invention concerne un véhicule comportant un ensemble vitré tel que défini précédemment, par exemple de type aéronef, ferroviaire ou maritime.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
[Fig. 1] la figure 1 représente schématiquement un mode particulier de réalisation d'un système vitré selon l'invention ;
[Fig. 2] la figure 2 représente schématiquement un autre mode de réalisation d'un système vitré selon l'invention ;
[Fig. 3] la figure 3 représente schématiquement encore un autre mode de réalisation d'un système vitré selon l'invention.

### Description de modes de réalisation

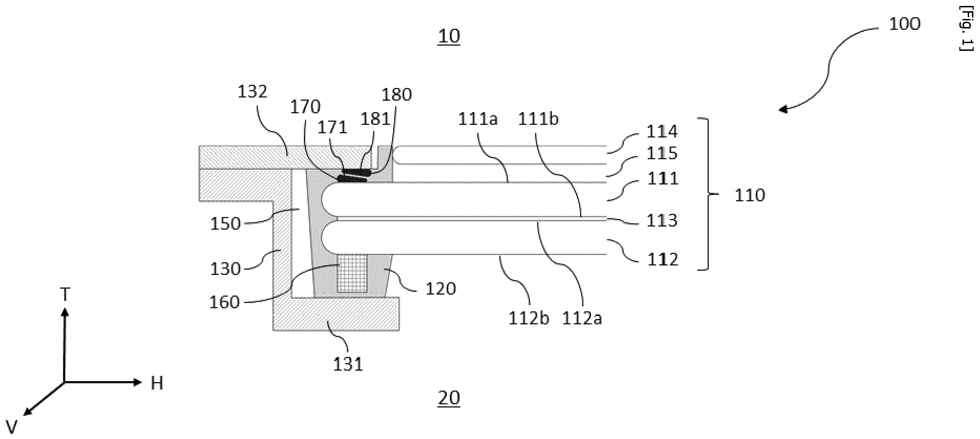

**La** figure 1 représente schématiquement un mode particulier de réalisation d'un système vitré 100 selon l'invention.

Dans la suite de la description, on considère à titre nullement limitatif les orientations verticale, horizontale et transversale en référence au trièdre (V, H, T) représenté sur la figure 1. Aussi, le système vitré 100 de la figure 1 y est représenté suivant une coupe transversale (i.e. dans l'épaisseur d'un vitrage pincé faisant partie dudit système vitré 100 et décrit ci-après).

Par convention, les termes « supérieur » et « inférieur » ou « haut » et « bas » ou « dessus » et « dessous » sont utilisés en référence à l'orientation transversale. Les termes « gauche » et « droit » sont quant à eux utilisés en référence à l'orientation horizontale.

Dans la figure 1, le système vitré 100 y est représenté tel que déjà intégré (fixé) à un véhicule de type aéronef. La suite de la description vise plus spécifiquement un aéronef de type avion commercial, encore dit plus simplement « avion ». L'invention s'applique néanmoins, de manière nullement limitative, à tout type d'aéronef destiné à être soumis à des différentiels de pressions entre un environnement extérieur 10 et l'intérieur 20 dudit aéronef, comme par exemple un avion de transport de marchandises, un avion de chasse, un hélicoptère, etc.

Pour la suite de la description, on considère également, de manière nullement limitative, que le système vitré 100 est constitutif du vitrage du cockpit dudit avion commercial, plus précisément du pare-brise de ce vitrage cockpit. Cela étant, de telles dispositions ne sont pas limitatives de l'invention, et rien n'exclut d'envisager que le système vitré 100 est constitutif d'un autre vitrage du cockpit, comme par exemple un vitrage latéral dudit cockpit, ou bien encore qu'il est constitutif d'un vitrage cabine, comme par exemple un hublot.

Par ailleurs, il convient de noter que le fait de considérer une intégration du système vitré 100 à un véhicule de type aéronef ne constitue qu'une variante d'implémentation de l'invention. Ainsi, de manière plus générale, tout type de véhicule pour lequel un vitrage de type pincé peut être intégré à la structure peut être envisagé. Cela concerne en particulier tout type de véhicule destiné à être soumis à des différentiels de pressions entre extérieur et intérieur, comme par exemple un véhicule ferroviaire, un véhicule maritime (exemple : bateau ou sous-marin pour des vitrages de type timonerie, hublot, etc.), un véhicule blindé, etc.

Dans le présent mode de réalisation, le système vitré 100 comporte un vitrage feuilleté 110. Ledit vitrage feuilleté 110 comprend un ensemble de plis structuraux dont un premier pli structural 111 ainsi qu'un deuxième pli structural 112 collé au premier pli structural 111 par l'intermédiaire d'une couche adhésive intercalaire 113.

Plus particulièrement, et tel qu'illustré par la figure 1 :
- le premier pli structural 111, dit « pli structural externe », est une feuille de verre agencée au plus proche (parmi les plis structuraux du vitrage feuilleté 110) de l'environnement extérieur 10 de l'avion. Ledit pli externe 111 comporte une face supérieure 111a ainsi qu'une face inférieure 111b ;
- le deuxième pli structural 112, dit « pli structural interne », est une feuille de verre agencée au plus proche (parmi les plis structuraux du vitrage feuilleté 110) de l'environnement intérieur 20 de l'avion. Il s'agit d'une feuille de verre collée au premier pli structural 111 par l'intermédiaire de ladite couche adhésive intercalaire 113. Ledit pli interne 112 comporte une face supérieure 112a ainsi qu'une face inférieure 112b.

Dans le mode de réalisation décrit ici, les plis externe et interne 111, 112 sont réalisés en verre organique, par exemple en polyméthacrylate de méthyle étiré (PMMA étiré), en polyméthacrylate de méthyle non étiré, en polycarbonate (PC), en polytéréphtalate d'éthylène (PET) ou en polyuréthane (PU).

Rien n'exclut non plus d'envisager un ou plusieurs plis structuraux réalisés en verre minéral. Un verre minéral désigne ici par exemple un verre sodocalcique, aluminosilicate, borosilicate, trempé thermiquement, ou renforcé chimiquement.

Par ailleurs, dans le mode de la figure 1, les plis structuraux externe et interne 111, 112 présentent des épaisseurs identiques (l'épaisseur d'un pli structural étant comptée dans la direction transversale T). Par exemple, l'épaisseur des plis structuraux externe et interne 111, 112 est comprise entre 3 mm et 30 mm, plus particulièrement entre 5 mm et 8 mm.

Rien n'exclut cependant d'envisager d'autres modes de réalisation dans lesquels, par exemple, le pli structural externe 111 présente une épaisseur distincte (i.e. supérieure ou inférieure) à celle du pli structural interne 112. A titre d'exemple nullement limitatif, l'épaisseur du pli structural externe 111 est égale à 5 mm, alors que l'épaisseur du pli structural interne 112 est égale à 6 mm.

Pour ce qui concerne la couche adhésive intercalaire 113, elle peut être réalisée en polyuréthane thermoplastique (TPU), polyvinylbutyral (PVB), copolymère éthylène - acétate de vinyle (EVA), résine ionomère, résine de coulée. L'épaisseur de la couche adhésive intercalaire 113 est par exemple comprise entre 0,5 et 6 mm, de préférence au moins égale à 2 mm.

Il est à noter que, dans le présent mode de réalisation, les plis structuraux du vitrage 110 sont uniquement constitués du pli structural externe 111 et du pli structural interne 112. Le fait de considérer un tel ensemble de plis structuraux ne constitue cependant qu'une variante d'implémentation de l'invention. Rien n'exclut en effet de considérer d'autres modes de réalisation dans lesquels ledit ensemble de plis structuraux comporte au moins trois plis structuraux, par exemple quatre plis structuraux.

Par ailleurs, dans le mode de réalisation illustré par la figure 1, le vitrage feuilleté 110 comporte également une feuille de verre 114 en contact direct avec l'environnement extérieur 10 et fixée au pli structural externe 111 par l'intermédiaire d'une couche adhésive intercalaire 115 répondant à des caractéristiques similaires en termes de matériaux à celles décrites pour la couche adhésive intercalaire 113. En outre, ladite feuille de verre 114 est positionnée en débord par rapport aux plis structuraux externe et interne 111, 112.

Il est à noter que la feuille de verre 114 est une feuille fine de protection non structurale, c'est-à-dire ne procurant pas la résistance mécanique requise pour un vitrage monolithique par exemple, si bien qu'elle ne forme pas un pli structural tel que ceux décrits ci-avant. Elle peut être réalisée en verre minéral ou organique, et peut présenter une épaisseur comprise entre 0,5 et 5 mm, de préférence entre 2 et 4 mm.

La face principale interne de la feuille de verre 114 (i.e. la face horizontale en contact avec la couche adhésive intercalaire 115) est par exemple porteuse d'un réseau de fils ou d'une couche mince telle que d'oxyde d'indium dopé à l'étain (en anglais ITO pour Indium Tin Oxide), d'argent, d'or ou équivalent, électroconduct(eurs)(rice), apte à dégivrer le vitrage feuilleté 110.

Dans le présent mode de réalisation, et tel qu'illustré par la figure 1, les plis structuraux externe et interne 111, 112 sont encapsulés au niveau de leur périphérie dans un joint d'étanchéité 120 surmoulé.

Le joint 120 est réalisé en matériau polymère élastomère, notamment injectable ou mis en œuvre par extrusion, tel qu'en silicone, polyuréthane (PU), élastomère à polysulfure, de sorte à réaliser une étanchéité à l'air et à l'eau du système vitré 100. Il peut également s'agir d'un joint plat collé.

Dans le présent mode de réalisation, le vitrage feuilleté 110 est fixé à la structure 130 de l'avion par l'intermédiaire d'un élément de montage de la structure de l'avion, dit « élément de montage supérieur 132 », agencé en regard du pli structural externe 111 et s'étendant dans un plan sensiblement parallèle à celui du vitrage 110. Plus spécifiquement, ledit élément de montage supérieur 132 correspond ici à un presse-glace (ou rapplique) boulonnée à la structure 130 et réalisé par exemple en aluminium, en carbone, en titane ou autre matériau composite ou non. Le presse-glace 132 exerce un appui sur le pli structural externe 111 (plus particulièrement sur le débord du pli structural externe 111 vis-à-vis de la feuille de verre 114), appui exercé par l'intermédiaire du joint 120 en silicone.

L'appui ainsi réalisé permet de maintenir par pincement, dans la direction normale au plan du vitrage 110 (i.e. dans la direction T illustrée sur la figure 1), l'ensemble formé par les plis structuraux externe et interne 111, 112 ainsi que le joint périphérique 120 entre :
- le presse-glace 132, et
- un élément de montage 131 de la carlingue 130, dit « élément de montage inférieur 131 », agencé en regard du pli structural interne 112 et s'étendant dans un plan sensiblement parallèle à celui du vitrage 110.

Ainsi, ledit élément de montage inférieur 131 et le presse-glace 132 contribuent à délimiter, dans la direction normale au plan du vitrage 110, un logement 150 dans lequel la périphérie du vitrage 110 est insérée et pincée de sorte à assurer son maintien.

Il est à noter que les éléments de montage inférieur 131 et supérieur 132 ont été décrits jusqu'ici comme deux éléments distincts constitutifs de la structure du véhicule. De telles dispositions ne sont toutefois pas limitatives de l'invention, et rien n'exclut bien entendu d'envisager d'autres modes de réalisation dans lesquels ces deux éléments sont d'un seul tenant.

Dans le mode de réalisation décrit ici, le système vitré 100 comporte en outre une cale de rigidification 160 (encore appelée cale de compensation ou cale d'épaisseur) logée dans la partie inférieure du joint périphérique 120 et en contact avec la face inférieure 112b du pli structural interne 112, de sorte à participer au bon maintien du vitrage feuilleté 110 dans sa position de montage. Cette calle de rigidification 160 est conventionnellement réalisée dans un matériau plus dur que celui du joint 120, et peut être pleine ou bien comprendre un ou plusieurs évidements.

Les aspects de mise en œuvre d'une telle cale de rigidification 160 sont bien connus de l'homme de l'art, et ne sont par conséquent pas davantage détaillés ici. En tout état de cause, il importe de noter que la présence de ladite cale de rigidification 160 est, au sens de la présente invention, optionnelle.

Dans son principe général, l'invention consiste à munir le système vitré 100 d'éléments, dit « éléments de blocage », configurés pour coopérer entre eux lors d'un glissement du vitrage feuilleté 110 dans le plan dans lequel il s'étend et orienté vers le centre dudit vitrage 110 (i.e. dans la direction H de la figure 1), de sorte à bloquer ledit glissement.

Ces éléments de blocage comportent :
- au moins un élément de blocage, dit « primaire », solidaire du vitrage 110 dans la zone où le pincement est exercé par la structure du véhicule sur le vitrage 110 (i.e. dans le mode décrit ici, au niveau de la zone périphérique d'encapsulation réalisée par le joint 120),
- au moins un élément de blocage, dit « secondaire », solidaire de la structure du véhicule.

Aucune limitation n'est attachée au matériau utilisé pour réaliser un élément de blocage selon l'invention. Ainsi, il peut être envisagé un matériau métallique (aluminium, titane, inox, etc.), un matériau composite (fibres courtes ou longues (tissu ou feutre), verre ou carbone ou coton, résine époxy ou polyester ou phénolique, etc.), ou bien encore un matériau plastique (PC, PMMA, etc.).

Il est à noter que l'expression « bloquer un glissement » ne signifie pas, au sens de la présente invention, que tous les mouvements horizontaux du vitrage feuilleté 110 sont empêchés. En effet, il est attendu que le vitrage feuilleté 110 puisse subir de légers glissements horizontaux lors du fonctionnement nominal de l'avion, de sorte à ne pas imposer une trop grande rigidité de l'ensemble vitré 100, et ainsi permettre à des contraintes mécaniques d'être évacuées. Les éléments de blocage sont néanmoins configurés pour bloquer tout glissement susceptible de conduire à un déchaussement du vitrage feuilleté 110 en dehors du logement 150, en particulier en cas de casse de tout ou partie des plis structuraux.

Lorsque les éléments de blocage primaire et secondaire sont dans la configuration dans laquelle ils bloquent le glissement ils sont dits dans la configuration de blocage et lorsque les éléments de blocage primaire et secondaires ne bloquent pas le glissement ils sont dits dans la configuration nominale.

Ainsi, dans la configuration nominale, les éléments de blocage primaire et secondaire autorisent lesdits légers glissements du vitrage dans le plan dans lequel il s'étend de sorte à ne pas imposer une trop grande rigidité au système vitré 100, et ainsi permettre à des contraintes mécaniques d'être évacuées.

Plus particulièrement, dans le mode particulier de réalisation de la figure 1, le système vitré 100 comporte un seul élément de blocage primaire 170 ainsi qu'un seul élément de blocage secondaire 180. Ces derniers sont respectivement solidaires du pli structural externe 111 au niveau de la face supérieure 111a et du presse-glace 132.

L'élément de blocage primaire 170 est rapporté et fixé sur la face supérieure 111a du pli structural externe 111. De la même manière, dans ce mode de réalisation, l'élément de blocage secondaire 180 est rapporté et fixé sur le presse-glace 132.Tout moyen de fixation connu de l'homme de l'art peut être utilisé, comme par exemple le collage, le frittage, le brasage ou le boulonnage.

Le fait de considérer que l'élément de blocage primaire 170 est rapporté et fixé sur le pli structural externe 111 ne constitue cependant qu'une variante d'implémentation de l'invention. Ainsi, rien n'exclut d'envisager que ledit élément de blocage primaire 170 vienne de matière (i.e. soit d'un seul tenant) avec ledit pli structural externe 111. Cela est par exemple mis en œuvre par usinage, moulage, ou formage. Des dispositions similaires sont bien entendu également envisageables concernant le maintien de l'élément de blocage secondaire 180 au presse-glace 132.

Comme cela est représenté sur la figure 1, le joint 120 se situe de part et d'autre des éléments de blocage primaire et secondaire 170, 180, mais également entre ces derniers (i.e. les éléments de blocage 170, 180 ne sont pas en contact direct dans le mode de réalisation décrit ici en référence à la figure 1). Cette mise en œuvre peut être obtenue selon toute méthode connue de l'homme de l'art, par exemple par injection de matière élastomère avec un moule adapté.

Par ailleurs, dans le mode de réalisation de la figure 1, la coopération entre les éléments de blocage primaire 170 et secondaire 180 s'effectue de manière indirecte au moyen de surfaces de contact 171, 181 respectives desdits éléments de blocage primaire et secondaire, lesdites surfaces de contact 171, 181 étant inclinées par rapport au plan du vitrage.

Il résulte de ces dispositions que les surfaces de contact 171, 181 sont agencées en regard l'une de l'autre, et sont configurées pour transmettre des forces de pression à la partie du joint 120 située entre elles lors d'un glissement du vitrage feuilleté 110 dans la direction H. Cette transmission de forces de pression, via le joint 120, caractérise ladite coopération indirecte et permet avantageusement de réaliser un pincement additionnel des plis structuraux externe et interne 111, 112 du fait de leur inclinaison, de sorte à bloquer ce glissement.

On comprend bien entendu que, pour réaliser la fonction de blocage de glissement, l'inclinaison des surfaces de contact 171, 181 s'effectue, dans le sens allant de la périphérie du vitrage 110 vers le centre de celui-ci, en direction du vitrage 110. Dit encore autrement, pour ce qui est du mode de réalisation de la figure 1, cette inclinaison s'effectue de l'extérieur 10 vers l'intérieur 20 de l'avion du fait que les éléments de blocage 171, 181 sont positionnés en partie haute par rapport au plan du vitrage.

Selon un exemple de réalisation, l'angle d'inclinaison des surfaces de contact 171, 181 par rapport au plan du vitrage 110 est compris entre 5° et 60°, plus particulièrement entre 20° à 40°, préférentiellement égal à 25°.

Le système vitré 100 selon l'invention a été décrit jusqu'à présent en considérant qu'il comportait un unique élément de blocage primaire 170 et un unique élément de blocage secondaire 180. L'invention n'est toutefois pas limitée par de telles dispositions, encore d'autres modes de réalisation pouvant être envisagés.

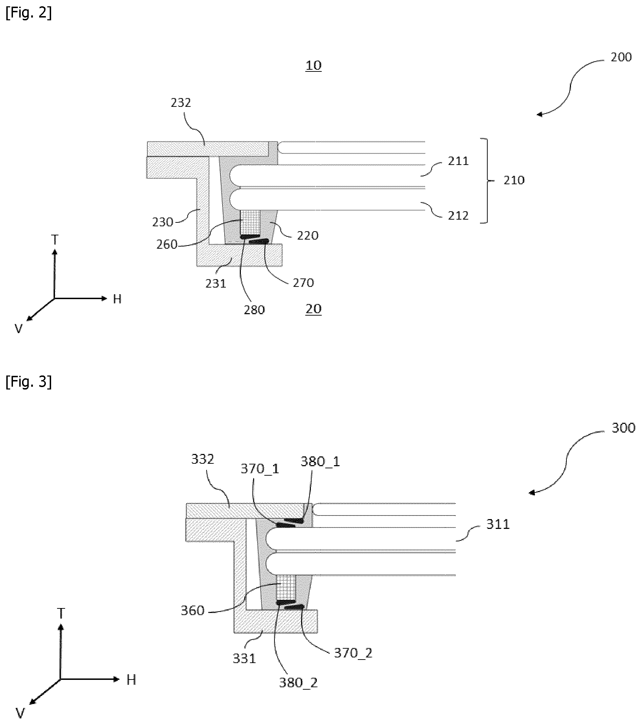

La figure 2 représente schématiquement un autre mode de réalisation d'un système vitré 200 selon l'invention.

Suivant des dispositions similaires à celles décrites en référence à la figure 1, le système vitré 200 comporte un vitrage feuilleté 210 comportant des plis structuraux 211, 212 encapsulés au niveau de leur périphérie dans un joint d'étanchéité 220 surmoulé, l'ensemble formé par les plis structuraux 211, 212 et le joint périphérique 220 étant maintenu par pincement par la structure du véhicule entre :
- un élément de montage supérieur 232 (presse-glace), et
- un élément de montage inférieur 231 de la structure 230.

Le système vitré 200 comporte en outre une cale de rigidification 260.

Dans cet autre mode de réalisation, et tel qu'illustré par la figure 2, le système vitré 200 comporte un seul élément de blocage primaire 270 ainsi qu'un seul élément de blocage secondaire 280. Ces derniers sont respectivement solidaires de la cale de rigidification 260 et de l'élément de montage inférieur 231.

Autrement dit, l'agencement des éléments de blocage primaire et secondaire 270, 280 est, dans ce mode de réalisation, symétrique par rapport au plan du vitrage en comparaison avec le mode de la figure 1.

Bien entendu, toutes les dispositions techniques décrites ci-avant en référence à la figure 1, pour ce qui concerne le maintien d'un élément de blocage 270, 280 à l'élément de montage 260, 231 auquel il est associé, s'appliquent encore ici.

La figure 3 représente schématiquement un autre mode de réalisation d'un système vitré 300 selon l'invention.

La configuration du système vitré 300 de la figure 3 résulte de la combinaison des systèmes vitrés 100 et 200 décrits respectivement en référence aux figures 1 et 2.

Ainsi, et tel qu'illustré par la figure 3, le système vitré 300 comporte :
- un élément de blocage primaire 370_1 et un élément de blocage secondaire 380_1 configurés pour coopérer entre eux et respectivement solidaires du pli structural externe 311 et l'élément de montage supérieur 332 (presse-glace),
- un élément de blocage primaire 370_2 et un élément de blocage secondaire 380_2 configurés pour coopérer entre eux et respectivement solidaires de la cale de rigidification 360 et de l'élément de montage inférieur 331.

D'une manière générale, aucune limitation n'est attachée au nombre d'éléments de blocage pouvant être envisagés. Ainsi, ledit système vitré peut par exemple comporter une pluralité d'éléments de blocage primaires, par exemple plus de deux éléments de blocage primaires, ainsi qu'une pluralité d'éléments de blocage secondaires, par exemple plus de deux éléments de blocage primaires, chaque élément de blocage primaire étant configuré pour coopérer avec un unique élément de blocage secondaire. Ces différents éléments de blocage sont donc associés entre eux par paires, ces différentes paires pouvant être réparties tout autour du vitrage au niveau de la zone périphérique d'encapsulation réalisée par le joint.

L'invention n'est pas non plus limitée au cas où un élément de blocage est considéré comme une entité d'étendue limitée au niveau de la zone périphérique d'encapsulation réalisée par le joint. Ainsi, suivant encore d'autres modes de réalisation de l'invention, le système vitré comporte un unique élément de blocage primaire et/ou un unique élément de blocage secondaire, chaque élément de blocage unique s'étendant de manière continue de sorte à former une boucle fermée à l'intérieur de laquelle sont agencés les plis structuraux du vitrage feuilleté.

L'invention a également été décrite jusqu'à présent en considérant des modes de réalisation dans lesquels des éléments de blocage primaire et secondaire coopèrent entre eux suivant une surface inclinée par rapport au plan du vitrage feuilleté. Toutefois, rien n'exclut d'envisager encore d'autres alternatives de réalisation, dès lors que la mise en contact des éléments de blocage primaire et secondaire permet de bloquer un glissement horizontal. Par exemple, deux éléments de blocage primaire et secondaire peuvent présenter des formes complémentaires l'une de l'autre, à la manière de deux crochets. Ces alternatives ne sont pas couvertes par les revendications.

Il importe de noter qu'encore d'autres aspects décrits jusqu'à présent, en référence aux modes de réalisation des figures 1 à 3, ne sont en rien limitatifs de l'invention, d'autres alternatives pouvant être envisagées. Ainsi, rien n'exclut d'avoir un vitrage autre qu'un vitrage feuilleté, dès lors que celui-ci comporte une pluralité de plis structuraux. A titre d'exemple, un hublot (d'aéronef ou de navire) est conventionnellement un double vitrage, l'attachement entre les deux plis structuraux étant réalisé grâce à un ou plusieurs éléments d'écartement (« spacer » en anglais) généralement en silicone.

Rien n'exclut non plus d'envisager des configurations de vitrage pincé dans lesquelles il n'y pas de joint de surmoulage dans lequel le vitrage est encapsulé. Par exemple, il peut être envisagé des modes de réalisations dans lesquels un joint d'étanchéité est présent sur la face supérieure du pli externe et/ou un joint d'étanchéité est présent sur la face inférieure du pli interne, sans que l'un quelconque de ces joints ne recouvre le chant du vitrage. On comprend alors que si des éléments de blocage sont positionnés d'un côté du vitrage où aucun joint d'étanchéité n'est présent, leur coopération s'effectue de manière directe par mise en contact de leur surface de contact lors d'un glissement (étant entendu que ces surfaces de contact ne sont avantageusement pas en contact l'une de l'autre lorsque le vitrage ne subit aucun glissement horizontal, de sorte à éviter de bloquer de légers glissements du vitrage et ainsi ne pas imposer une trop grande rigidité de l'ensemble vitré).

De manière encore plus générale, il est possible d'envisager des alternatives dans lesquelles aucun élément d'étanchéité n'est présent en périphérie du vitrage pincé.

Enfin, l'invention a été décrite jusqu'à présent en considérant que le système vitré est utilisé pour un véhicule. Toutefois, encore d'autres applications peuvent être envisagées, comme par exemple une utilisation pour un bâtiment de sorte à réaliser un vitrage anti-effraction apte à ne pas se déchausser sous l'effet de son propre poids en cas de casse.

## Revendications

1. Ensemble comprenant une structure et un système vitré (100, 200, 300), le système vitré (100, 200, 300) comprenant un vitrage (110), par exemple un vitrage feuilleté (110), comportant des plis structuraux (111, 112), ledit vitrage étant maintenu par pincement par une structure, ledit système vitré comportant en outre :
- au moins un élément de blocage, dit « primaire » (170), solidaire du vitrage dans la zone où le pincement est exercé par la structure,
- au moins un élément de blocage, dit « secondaire » (180), solidaire de la structure, ledit système vitré étant **caractérisé en ce que** lesdits au moins un élément de blocage primaire et secondaire sont configurés pour présenter une configuration de blocage dans laquelle ils coopèrent entre eux lors d'un glissement du vitrage dans le plan dans lequel il s'étend et orienté vers le centre dudit vitrage, de sorte à bloquer ledit glissement, la coopération entre lesdits au moins deux d'éléments de blocage primaire (170) et secondaire (180) s'effectuant de manière directe ou indirecte au moyen de surfaces de contact (171, 181) respectives desdits éléments de blocage primaire et secondaire, lesdites surfaces de contact (171, 181) étant inclinées par rapport au plan du vitrage, l'angle d'inclinaison des surfaces de contact par rapport au plan du vitrage étant compris entre 5° et 60°, plus particulièrement entre 20° à 40°, préférentiellement égal à 25°,
lesdits au moins un élément de blocage primaire et secondaire étant, en outre, configurés pour présenter une configuration nominale dans laquelle ils ne coopèrent pas ensemble lorsque le vitrage ne subit aucun glissement dans ledit plan.

2. Ensemble selon la revendication 1, ledit système comportant une pluralité d'éléments de blocage primaires, ainsi qu'une pluralité d'éléments de blocage secondaires, chaque élément de blocage primaire étant configuré pour coopérer avec un unique élément de blocage secondaire.

3. Ensemble selon la revendication 1, ledit système comportant un unique élément de blocage primaire et/ou un unique élément de blocage secondaire, chaque élément de blocage unique s'étendant de manière continue de sorte à former une boucle fermée à l'intérieur de laquelle sont agencés les plis structuraux.

4. Ensemble selon l'une quelconque des revendications 1 à 3, dans lequel :
- au moins deux d'éléments de blocage primaire (170) et secondaire (180) configurés pour coopérer entre eux sont respectivement solidaires d'un pli structural externe (111) du vitrage (110) et d'un élément de montage (132) de la structure agencé en regard dudit pli structural externe, par exemple un presse-glace,
et/ou
- au moins deux d'éléments de blocage primaire et secondaire configurés pour coopérer entre eux sont respectivement solidaires d'une cale de rigidification (160) et d'un élément de montage (131) de la structure agencé en regard dudit pli structural interne, ladite cale étant logée dans un joint d'étanchéité (120), par exemple un joint d'étanchéité surmoulé dans lequel sont encapsulés les plis structuraux au niveau de leur périphérie, et fixée à un pli structural interne (112) du vitrage.

5. Ensemble selon la revendication 4, dans lequel :
- ledit au moins un élément de blocage primaire (170) vient de matière avec le pli structural externe (111) ou avec la cale de rigidification (160),
ou
- ledit au moins un élément de blocage primaire est rapporté et fixé sur le pli structural externe ou sur la cale de rigidification, par exemple par collage, frittage, brasage ou boulonnage.

6. Ensemble selon l'une quelconque des revendications 4 ou 5, dans lequel :
- ledit au moins un élément de blocage secondaire (180) vient de matière avec ledit élément de montage (132, 131) de la structure agencé en regard du pli structural externe (111) ou du pli structural interne (112),
ou
- ledit au moins un élément de blocage secondaire est rapporté et fixé sur ledit élément de montage de la structure agencé en regard du pli structural externe ou du pli structural interne, par exemple par collage, frittage, brasage ou boulonnage.

7. Utilisation d'un ensemble vitré selon l'une quelconque des revendications 1 à 6 pour un véhicule, par exemple de type aéronef, ferroviaire ou maritime, ou pour un bâtiment.

8. Véhicule comportant un ensemble vitré selon l'une quelconque des revendications 1 à 6, par exemple de type aéronef, ferroviaire ou maritime.

## Patentansprüche

1. Anordnung, umfassend eine Struktur und ein verglastes System (100, 200, 300), das verglaste System (100, 200, 300) umfassend eine Verglasung (110), beispielsweise eine Verbundverglasung (110), die Strukturlagen (111, 112) aufweist, wobei die Verglasung durch Klemmen durch eine Struktur gehalten wird, wobei das verglaste System ferner aufweist:
- mindestens ein als "primär" bezeichnetes Blockierelement (170), das mit der Verglasung in dem Bereich fest verbunden ist, in dem das Klemmen durch die Struktur ausgeübt wird,
- mindestens ein als "sekundär" bezeichnetes Blockierelement (180), das mit der Struktur fest verbunden ist, wobei das verglaste System
**dadurch gekennzeichnet ist, dass** das mindestens eine primäre und sekundäre Blockierelement zum Vorweisen einer Blockierkonfiguration konfiguriert sind, in der sie bei einem Gleiten der Verglasung in der Ebene, in der sie sich erstreckt, und das zu der Mitte der Verglasung ausgerichtet ist, miteinander zusammenwirken, um das Gleiten zu blockieren, wobei das Zusammenwirken zwischen den mindestens zwei primären (170) und sekundären (180) Blockierelementen direkt oder indirekt mittels jeweiliger Kontaktoberflächen (171, 181) der primären und sekundären Blockierelemente erfolgt, wobei die Kontaktoberflächen (171, 181) in Bezug auf die Ebene der Verglasung geneigt sind, wobei der Neigungswinkel der Kontaktoberflächen in Bezug auf die Ebene der Verglasung zwischen 5° und 60° liegt, spezieller zwischen 20° und 40°, vorzugsweise gleich 25°,
wobei das mindestens eine primäre und sekundäre Blockierelement ferner zum Vorweisen einer Nennkonfiguration konfiguriert sind, in der sie nicht zusammenwirken, wenn die Verglasung keinem Gleiten in der Ebene unterliegt.

2. Anordnung nach Anspruch 1, wobei das System eine Vielzahl von primären Blockierelementen sowie eine Vielzahl von sekundären Blockierelementen umfasst, wobei jedes primäre Blockierelement zum Zusammenwirken mit einem einzigen sekundären Blockierelement konfiguriert ist.

3. Anordnung nach Anspruch 1, wobei das System ein einziges primäres Blockierelement und/oder ein einziges sekundäres Blockierelement umfasst, wobei sich jedes einzige Blockierelement durchgehend erstreckt, um eine geschlossene Schleife auszubilden, innerhalb derer die Strukturlagen eingerichtet sind.

4. Anordnung nach einem der Ansprüche 1 bis 3, wobei:
- mindestens zwei primäre (170) und sekundäre (180) Blockierelemente, die zum Zusammenwirken miteinander konfiguriert sind, jeweils mit einer äußeren Strukturlage (111) der Verglasung (110) und einem Montageelement (132) der Struktur, das gegenüber der äußeren Strukturlage eingerichtet ist, beispielsweise einer Scheibenhalterung, fest verbunden sind, und/oder
- mindestens zwei primäre und sekundäre Blockierelemente, die zum Zusammenwirken miteinander konfiguriert sind, jeweils mit einem Versteifungskeil (160) und einem Montageelement (131) der Struktur fest verbunden sind, das gegenüber der inneren Strukturlage eingerichtet ist, wobei der Keil in einer Dichtung (120) aufgenommen ist, beispielsweise einer umspritzten Dichtung, in der die Strukturlagen auf Höhe ihres Umfangs eingekapselt sind, und an einer inneren Strukturlage (112) der Verglasung befestigt ist.

5. Anordnung nach Anspruch 4, wobei:
- das mindestens eine primäre Blockierelement (170) mit der äußeren Strukturlage (111) oder mit dem Versteifungskeil (160) einstückig ausgebildet ist,
oder
- das mindestens eine primäre Blockierelement auf der äußeren Strukturlage oder auf dem Versteifungskeil angebracht und befestigt ist, beispielsweise durch Kleben, Sintern, Löten oder Verschrauben.

6. Anordnung nach einem der Ansprüche 4 bis 5, wobei:
- das mindestens eine sekundäre Blockierelement (180) mit dem Montageelement (132, 131) der Struktur einstückig ausgebildet ist, das gegenüber der äußeren Strukturlage (111) oder der inneren Strukturlage (112) eingerichtet ist,
oder
- das mindestens eine sekundäre Blockierelement an dem Montageelement der Struktur angebracht und befestigt ist, das gegenüber der äußeren Strukturlage oder der inneren Strukturlage eingerichtet ist, beispielsweise durch Kleben, Sintern, Löten oder Verschrauben.

7. Verwendung einer Verglasungseinheit nach einem der Ansprüche 1 bis 6 für ein Fahrzeug, beispielsweise von der Art Luftfahrzeug, Schienenfahrzeug oder Wasserfahrzeug, oder für ein Gebäude.

8. Fahrzeug, das eine Verglasungsanordnung nach einem der Ansprüche 1 bis 6 aufweist, beispielsweise von der Art Luftfahrzeug, Schienenfahrzeug oder Wasserfahrzeug.

## Claims

1. An assembly comprising a structure and a glazed system (100, 200, 300), the glazed system (100, 200, 300) comprising a glazing (110), for example a laminated glazing (110), comprising structural plies (111, 112), said glazing being clamped in place by a structure, said glazed system further comprising:
- at least one blocking element (170) referred to as a "primary blocking element (170)", rigidly connected to the glazing in the zone where the clamping is exerted by the structure,
- at least one blocking element (180) referred to as a "secondary blocking element (180)", rigidly connected to the structure,
said glazed system being **characterized in that** said at least one primary and secondary blocking element are configured to cooperate with one another when the glazing slips in the plane wherein it extends, which slip is oriented towards the center of said glazing, so as to block said slippage, the cooperation between said at least two primary (170) and secondary (180) blocking elements being effected directly or indirectly by means of respective contact surfaces (171, 181) of said primary and secondary blocking elements, said contact surfaces (171, 181) being inclined with respect to the plane of the glazing, the angle of inclination of the contact surfaces with respect to the plane of the glazing being between 5° and 60°, more particularly between 20° and 40°, preferentially equal to 25°,
said at least one primary and secondary blocking elements being further configured to have a nominal configuration wherein they do not cooperate together when the glazing is not subjected to any slippage in said plane.

2. The assembly according to claim 1, said system comprising a plurality of primary blocking elements, as well as a plurality of secondary blocking elements, each primary blocking element being configured to cooperate with a single secondary blocking element.

3. The assembly according to claim 1, said system comprising a single primary blocking element and/or a single secondary blocking element, each single blocking element extending continuously so as to form a closed loop within which the structural plies are arranged.

4. The assembly according to any one of claims 1 to 3, wherein:
- at least two primary (170) and secondary (180) blocking elements configured to cooperate with one another are respectively rigidly connected to an external structural ply (111) of the glazing (110) and to a mounting element (132) of the structure arranged opposite said external structural ply, for example a retainer,
and/or
- at least two the primary and secondary blocking elements configured to cooperate with one another are respectively rigidly connected to a stiffening wedge (160) and a mounting element (131) of the structure arranged opposite said internal structural ply, said wedge being housed in a seal (120), for example an overmolded seal wherein the structural plies are encapsulated at their periphery, and attached to an internal structural ply (112) of the glazing.

5. The assembly according to claim 4, wherein:
- said at least one primary blocking element (170) is integral with the external structural ply (111) or with the stiffening wedge (160),
or
- said at least one primary blocking element is attached and fixed to the external structural ply or to the stiffening wedge, for example by gluing, sintering, brazing or bolting.

6. The assembly according to any one of claims 4 to 5, wherein:
- said at least one secondary blocking element (180) is integral with said mounting element (132, 131) of the structure arranged opposite the external structural ply (111) or the internal structural ply (112),
or
- said at least one secondary blocking element is attached and fixed to said structural mounting element arranged opposite the external structural ply or the internal structural ply, for example by gluing, sintering, brazing or bolting.

7. The use of a glazed system according to any one of claims 1 to 6 for a vehicle, for example of the aircraft, rail or marine type, or for a building.

8. A vehicle comprising a glazed system according to any one of claims 1 to 6, for example of the aircraft, rail or maritime type.
